# EUROPÄISCHE PATENTANMELDUNG

(11) **EP 4 268 691 A2**
(43) Veröffentlichungstag der Anmeldung: **01.11.2023**
(21) Anmeldenummer: 23170648.2
(22) Anmeldetag: 28.04.2023
(51) Int. Cl.: A47J 37/12

(54) **FRITTIEREINSATZ FÜR EINE FRITTEUSE MIT EINEM FRITTIERKORB**

(30) Priorität: 29.04.2022 AT 502902022
(71) Anmelder: Oosten, Harry, 8552 Eibiswald (AT); Oosten, Evelyne, 8552 Eibiswald (AT)
(72) Erfinder: Oosten, Harry, 8552 Eibiswald (AT); Oosten, Evelyne, 8552 Eibiswald (AT)
(74) Vertreter: Gibler & Poth Patentanwälte KG

(57) **Zusammenfassung**

Bei einem Frittiereinsatz (16) für eine Fritteuse (1) mit einem Frittierkorb (20), wobei der Frittierkorb (20) eine Oberseite (21) mit einer Öffnung zur Zufuhr und Entnahme von Frittiergut (22) in den Frittierkorb (20) und eine von der Oberseite (21) gegenüberliegende und beabstandet zu der Oberseite (21) angeordnete Unterseite (23) aufweist, wobei der Frittiereinsatz (16) wenigstens einen sich von der Unterseite (23) des Frittierkorbs (20) in Richtung der Oberseite (21) des Frittierkorbs (20) erstreckenden Schacht (18) als Strömungskanal für Frittüre (4) umfasst, wobei der Schacht (18) ein der Unterseite (23) des Frittierkorbs (20) zugewandtes unteres Ende (24) und ein gegenüberliegendes und beabstandet zu dem unteren Ende (24) des Schachtes (18) angeordnetes oberes Ende (25) aufweist, wobei an einer Wand des Schachtes (18) Durchlassöffnungen (26) zum Strömen von Frittüre (4) aus dem Schacht (18) ausgebildet sind, wird vorgeschlagen, dass an dem oberen Ende (25) des Schachtes (18) eine Abdeckung (19) angeordnet ist, welche Abdeckung (19) den Schacht (18) an dem oberen Ende (25) verdeckt.

## Beschreibung

Die Erfindung betrifft einen Frittiereinsatz für eine Fritteuse mit einem Frittierkorb, gemäß dem Oberbegriff des Patentanspruches 1.

Es sind Frittiereinsätze mit Frittierkörbe zum Frittieren von Frittiergut bekannt. In der Regel wird das Frittiergut, wie beispielsweise Pommes frites oder Hähnchenteile, in den Frittierkorb des Frittiereinsatzes gelegt, anschließend der Frittiereinsatz in einen mit Frittüre gefüllten Frittierbehälter einer Fritteuse eingehängt und das Frittiergut mit der Fritteuse frittiert.

Nachteilig an herkömmlichen Frittiereinsätzen mit Frittierkörben ist, dass das Frittiergut, vor allem ein Haufen von Frittiergut, ohne Schütteln des Frittierguts während des Frittierens nicht gleichmäßig frittiert wird.

Aufgabe der Erfindung ist es daher einen Frittiereinsatz der eingangs genannten Art anzugeben, mit welchem die genannten Nachteile vermieden werden können, mit welchem Frittiergut auch in einem fast vollständig gefüllten Frittierkorb des Frittiereinsatzes gleichmäßig frittiert werden kann.

Erfindungsgemäß wird dies durch die Merkmale des Patentanspruches 1 erreicht.

Dadurch ergibt sich der Vorteil, dass Frittiergut, insbesondere ein Haufen von Frittiergut bzw. Frittiergut in einem fast vollständig gefüllten Frittierkorb, gleichmäßiger und schneller frittiert werden kann als in derzeit bekannten Frittiereinsätzen mit Frittierkörben, da es nicht zu einer Verdrängung einer Frittierströmung aus dem Inneren des Frittierguthaufens kommt. Dadurch wird erreicht, dass das Frittiergut viel gleichmäßiger frittiert wird, wodurch es nicht zu dem bekannten Frittierergebnis kommt, dass der Haufen am Rand bzw. an der Unterseite des Frittierkorbes schneller frittiert wird, als im Vergleich zum Inneren des Frittierkorbes. Durch die Abdeckung des Schachtes wird beim Frittieren des Frittierguts erreicht, dass die Frittüre seitlich aus dem Schacht durch die Durchlassöffnungen strömt, wodurch einerseits eine Frittüreströmung durch den Haufen des Frittierguts erreicht wird und andererseits auch der Haufen aufgelockert wird. Dabei hat sich aus Untersuchungen ein deutlich gleichmäßigeres Frittierergebnis als bei Verwendung herkömmlicher Frittiereinsätze mit Frittierkörbe gezeigt.

Die Erfindung betrifft weiters ein Verfahren zum Frittieren von Frittiergut in einer Fritteuse gemäß dem Patentanspruch 7.

Die Erfindung hat daher weiters die Aufgabe ein Verfahren der eingangs genannten Art anzugeben, mit welchem die genannten Nachteile vermieden werden können, mit welchem Frittiergut in einem fast vollständig gefüllten Frittierkorb eines Frittiereinsatzes gleichmäßig frittiert werden kann.

Erfindungsgemäß wird dies durch die Merkmale des Patentanspruches 7 erreicht.

Die Vorteile des Verfahrens entsprechen den Vorteilen des oben genannten Frittiereinsatzes.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugt Ausführungsform des Frittiereinsatzes in Schnittansicht,
Fig. 2 eine erste bevorzugte Ausführungsform des Schachtes in Schnittansicht,
Fig. 3 eine zweite bevorzugte Ausführungsform des Schachtes in Schnittansicht,
Fig. 4 eine zweite bevorzugte Ausführungsform des Frittiereinsatzes in Schnittansicht,
Fig. 5 die in Fig. 4 gezeigte bevorzugte Ausführungsform des Frittiereinsatzes in Draufsicht,
Fig. 6 eine Darstellung eines Frittiersystems in einer Schnittansicht.

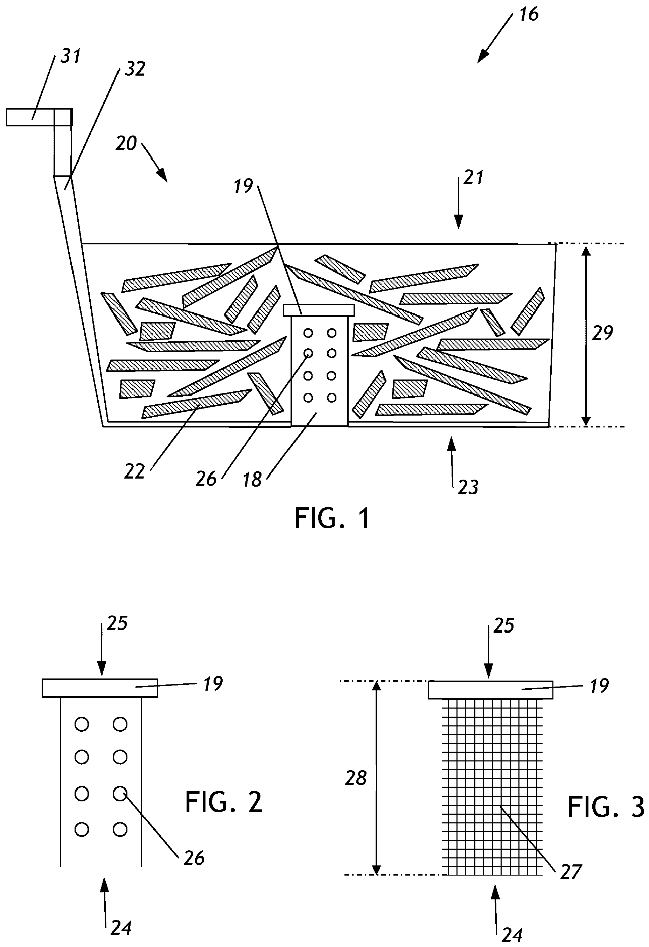

Die Fig. 1 bis 5 zeigen zumindest Teile bevorzugter Ausführungsformen eines Frittiereinsatzes 16 für eine Fritteuse 1 mit einem Frittierkorb 20, wobei der Frittierkorb 20 eine Oberseite 21 mit einer Öffnung zur Zufuhr und Entnahme von Frittiergut 22 in den Frittierkorb 20 und eine von der Oberseite 21 gegenüberliegende und beabstandet zu der Oberseite 21 angeordnete Unterseite 23 aufweist, wobei der Frittiereinsatz 16 wenigstens einen sich von der Unterseite 23 des Frittierkorbs 20 in Richtung der Oberseite 21 des Frittierkorbs 20 erstreckenden Schacht 18 als Strömungskanal für Frittüre 4 umfasst, wobei der Schacht 18 ein der Unterseite 23 des Frittierkorbs 20 zugewandtes unteres Ende 24 und ein gegenüberliegendes und beabstandet zu dem unteren Ende 24 des Schachtes 18 angeordnetes oberes Ende 25 aufweist, wobei an einer Wand des Schachtes 18 Durchlassöffnungen 26 zum Strömen von Frittüre 4 aus dem Schacht 18 ausgebildet sind, wobei an dem oberen Ende 25 des Schachtes 18 eine Abdeckung 19 angeordnet ist, welche Abdeckung 19 den Schacht 18 an dem oberen Ende 25 verdeckt.

Weiters ist ein Verfahren zum Frittieren von Frittiergut 22 in einer Fritteuse 1 umfassend einen Frittiereinsatz 16 mit einem Frittierkorb 20 vorgesehen,
- wobei in einem ersten Schritt dem Frittierkorb 20 das Frittiergut 22 über eine Öffnung an einer Oberseite 21 des Frittierkorbs 20 zugeführt wird, wobei der Frittierkorb 20 eine von der Oberseite 21 gegenüberliegende und beabstandet zu der Oberseite 21 angeordnete Unterseite 23 aufweist, wobei sich wenigstens ein Schacht 18 von der Unterseite 23 des Frittierkorbs 20 in Richtung der Oberseite 21 des Frittierkorbs 20 erstreckt, wobei der wenigstens eine Schacht 18 ein der Unterseite 23 des Frittierkorbs 20 zugewandtes unteres Ende 24 und ein gegenüberliegendes und beabstandet zu dem unteren Ende 24 des Schachtes 18 angeordnetes oberes Ende 25 aufweist, wobei an dem oberen Ende 25 des Schachtes 18 eine Abdeckung 19 angeordnet ist, welche Abdeckung 19 den Schacht 18 an dem oberen Ende 25 verdeckt, wobei an einer Wand des Schachtes 18 Durchlassöffnungen 26 zum Strömen von Frittüre 4 aus dem Schacht 18 ausgebildet sind,
- wobei in einem nachfolgenden Schritt der Frittiereinsatz 16 in einen mit Frittüre 4 gefüllten Frittierbehälter 2 der Fritteuse 1 eingesetzt wird,
- wobei bei dem Frittieren die Frittüre 4 von dem unteren Ende 24 des Schachtes 18 in den Schacht 18 strömt und den Schacht 18 durch die Durchlassöffnungen 26 verlässt.

Dadurch ergibt sich der Vorteil, dass Frittiergut 22, insbesondere ein Haufen von Frittiergut 22 bzw. Frittiergut 22 in einem fast vollständig gefüllten Frittierkorb 20, gleichmäßiger und schneller frittiert werden kann als in derzeit bekannten Frittiereinsätzen mit Frittierkörben, da es nicht zu einer Verdrängung einer Frittierströmung aus dem Inneren des Frittierguthaufens kommt. Dadurch wird erreicht, dass das Frittiergut 22 viel gleichmäßiger frittiert wird, wodurch es nicht zu dem bekannten Frittierergebnis kommt, dass der Haufen am Rand bzw. an der Unterseite 23 des Frittierkorbes 20 schneller frittiert wird, als im Vergleich zum Inneren des Frittierkorbes 20. Durch die Abdeckung 19 des Schachtes 18 wird beim Frittieren des Frittierguts 22 erreicht, dass die Frittüre 4 seitlich aus dem Schacht 18 durch die Durchlassöffnungen 26 strömt, wodurch einerseits eine Frittüreströmung durch den Haufen des Frittierguts 22 erreicht wird und andererseits auch der Haufen aufgelockert wird. Dabei hat sich aus Untersuchungen ein deutlich gleichmäßigeres Frittierergebnis als bei Verwendung herkömmlicher Frittiereinsätze 16 mit Frittierkörbe 20 gezeigt.

Der erfindungsgemäße Frittiereinsatz 16 ist dazu vorgesehen in eine Fritteuse 1 eingesetzt zu werden. Eine Fritteuse 1 ist eine Vorrichtung zum Frittieren von Frittiergütern. Für gewöhnlich weist die Fritteuse 1 einen Frittierbehälter 2 auf. Der Frittierbehälter 2 ist ein Behältnis, in welchem eine Frittüre 4, insbesondere Öl oder Fett, erhitzt wird und in dem das Frittiergut 22 frittiert wird.

Bevorzugt kann der Frittierbehälter 2 als Wanne ausgebildet sein.

Für gewöhnlich ist in einem Betriebszustand der Fritteuse 1 der Frittierbehälter 2 mit Frittüre 4 bis zu einer Mindestfüllstandshöhe angefüllt. Die Oberfläche der Frittüre 4 bedeutet dabei die Oberfläche der in dem Frittierbehälter 2 eingefüllten Frittüre 4. Als Heizquelle 3 können beispielsweise Heizstäbe oder eine oder mehrere Heizspiralen verwendet werden.

Bevorzugt kann in der Fritteuse 1 eine Frittüreströmung ausgebildet sein. Die Frittüreströmung kann sich dabei durch Konvektion ergeben, beispielsweise wenn das kältere Frittiergut 22 in die erhitzte Frittüre 4 hineingegeben wird. Bevorzugt kann die Frittüreströmung auch durch eine Zirkulation der Frittüre 4 in der Fritteuse 1, insbesondere mittels einer Pumpe, ausgebildet werden.

Es ist vorgesehen, dass der Frittiereinsatz 16 einen Frittierkorb 20 umfasst. Der Frittierkorb 20 ist dabei Teil des Frittiereinsatzes 16.

Bevorzugt ist der Frittierkorb 20 aus Metall, insbesondere Edelstahl, ausgebildet.

Bevorzugt kann der Frittiereinsatz 16 einen Griff 31, insbesondere einen Handgriff oder einen Henkel, umfassen. Dadurch kann der Frittiereinsatz 16 einfach in die Fritteuse 1 eingehängt werden.

Bevorzugt kann der Griff 31 aus einem Metall, insbesondere Edelstahl, ausgebildet sein. Bevorzugt kann der Griff 31 mit einem nicht oder schlecht wärmeleitenden Material, insbesondere einem Polymer, umwickelt oder abgedeckt sein. In der Fig. 1 ist der Griff 31 des Frittiereinsatzes 16 beispielhaft gezeigt.

Bevorzugt kann der Frittiereinsatz 16 ein Zwischenstück 32 umfassen, welches Zwischenstück 32 den Griff 31 mit dem Frittierkorb 20 verbindet.

Bevorzugt kann das Zwischenstück 32 an dem Frittierkorb 20 und/oder an dem Griff 31 befestigt sein.

Bevorzugt kann das Zwischenstück 32 mehrteilig ausgebildet sein.

Bevorzugt kann das Zwischenstück aus Metall, insbesondere aus Edelstahl, ausgebildet sein. In Fig. 1 ist das Zwischenstück 32 des Frittiereinsatzes 16 beispielhaft gezeigt.

Der erfindungsgemäße Frittierkorb 20 weist eine Oberseite 21 mit einer Öffnung auf. Mittels der Öffnung des Frittierkorbs 20 kann das Frittiergut 22 in den Frittierkorb 20 gelegt und nach dem Frittieren wieder entnommen werden. Bevorzugt wird das Frittiergut 22 dem Frittierkorb 20 durch die Öffnung zugeführt oder eingebracht. Beispielsweise können durch die Öffnung als Frittiergut 22 Pommes frites in den Frittierkorb 20 gelegt bzw. angeordnet werden. In Fig. 1 ist eine Schnittansicht einer ersten bevorzugten Ausführungsform des Frittiereinsatzes 16 gezeigt, wobei in dem Frittierkorb 20 angeordnete Pommes frites beispielhaft gezeigt sind. Das Bezugszeichen 22 zeigt dabei auf ein beispielhaft gezeigtes Pommes frites.

Der Frittierkorb 20 weist eine von der Oberseite 21 gegenüberliegende und beabstandet zu der Oberseite 21 angeordnete Unterseite 23 auf. Die Oberseite 21 und die Unterseite 23 des Frittierkorbs 20 sind dabei in Fig. 1 ersichtlich. Bevorzugt weist die Oberseite 21 bei einem in eine Fritteuse 1 eingehängten Frittiereinsatz 16 nach oben und die Unterseite 23 nach unten, sodass das Frittiergut 22 bei dem Frittieren in dem Frittierkorb 20 gehalten wird.

Es ist vorgesehen, dass der Frittiereinsatz 16 wenigstens einen sich von der Unterseite 23 des Frittierkorbs 20 in Richtung der Oberseite 21 des Frittierkorbs 20 erstreckenden Schacht 18 als Strömungskanal für die Frittüre 4 umfasst. Bevorzugt erstreckt sich von der Unterseite 23 des Frittierkorbs 20 wenigstens ein, nach unten hin offener Schacht 18 nach oben hin. Derart kann die Frittüre 4 durch den Schacht 18 ungehindert in jene Bereiche des Frittiereinsatzes 16 gelangen, sodass ein gleichmäßiges Frittieren eines haufenartigen Frittierguts 22 möglich ist.

Es ist vorgesehen, dass der Schacht 18 ein unteres Ende 24, welches untere Ende 24 der Unterseite 23 des Frittierkorbs 20 zugewandt ist, und ein oberes Ende 25, welches obere Ende 25 gegenüberliegend und beabstandet zu dem unteren Ende 24 des Schachtes 18 angeordnet ist, aufweist. Die beiden Enden, also das untere Ende 24 und das obere Ende 25, sind beispielhaft in den Fig. 2 und 3 gezeigt.

Bevorzugt kann der Schacht 18, insbesondere in einem nicht in dem Frittierkorb 20 eingebauten Zustand, an dem unteren Ende 24 offen sein. Dies ist beispielhaft in Fig. 2 gezeigt. Dadurch kann der Schacht 18 einfach hergestellt werden, da beispielweise lediglich ein Lochblech zu einem Zylinder ausgebildet, insbesondere gebogen und verschweißt, werden muss, anschließend mit einer Abdeckung 19 versehen werden muss, und zum Schluss an einem bereits bekannten Frittierkorb 20 eines Frittiereinsatzes 16 angeordnet bzw. befestigt werden muss. Dadurch kann erreicht werden, dass auch bereits bekannte Frittierkörbe besonders einfach zu dem erfindungsgemäßen Frittiereinsatz 16 ausgebildet werden können.

Bevorzugt kann der an dem unterem Ende 24 offene Schacht 18 jedoch auch bei der Herstellung des Frittierkorbs 20 ausgebildet werden.

Es ist vorgesehen, dass an einer Wand des Schachtes 18 Durchlassöffnungen 26 zum Strömen von Frittüre 4 aus dem Schacht 18 ausgebildet sind. Dies ist beispielhaft in den Fig. 1 und 2 gezeigt.

Bevorzugt können die Durchlassöffnungen 26 als Bohrlöcher ausgebildet sein.

Bevorzugt kann der Schacht 18 aus einem Lochblech ausgebildet sein.

Bevorzugt können die Durchlassöffnungen 26 einen Durchmesser von mindestens 2 mm, besonders bevorzugt mindestens 4 mm, insbesondere mindestens 6 mm, aufweisen.

Bevorzugt können die Durchlassöffnungen 26 eine Breite und eine Länge aufweisen. Dabei kann bevorzugt vorgesehen sein, dass die Breite und/oder die Länge mindestens 2 mm, besonders bevorzugt mindestens 4 mm, insbesondere mindestens 6 mm, ist.

Bevorzugt kann der Schacht 18 mindestens 8, besonders bevorzugt mindestens 16, insbesondere mindestens 32, Durchlassöffnungen 26 aufweisen.

Besonders bevorzugt kann vorgesehen sein, dass die Wand des Schachtes 18 als Gitter 27 ausgebildet ist. Bevorzugt kann der wenigstens eine Schacht 18 aus einem Gitter 27 ausgebildet sein. Dadurch kann das Frittiergut 22 aus dem Inneren des Schachtes 18 ferngehalten werden, während die Frittüre 4 durch die Wände nach außen dringen kann. Dadurch kann eine besonders gute und insbesondere gleichmäßig verteilte Strömung der Frittüre 4 von dem Schacht 18 kommend zu dem Frittiergut 22 erreicht werden. Durch diese gleichmäßig verteilte Strömung durch das Gitter 27 kann die Frittüre 4 das Frittiergut 22 eines vollgefüllten Frittierkorbs 20 besonders gleichmäßig frittieren, wodurch sich auch die Frittierzeit reduziert.

Bevorzugt kann das Gitter 27 eine Maschenweite von mindestens 2 mm, besonders bevorzugt mindestens 3 mm, insbesondere mindestens 4 mm, aufweisen.

Bevorzugt kann die Wand des Schachtes 18 auch als Schachtumwandung bezeichnet werden. Bevorzugt kann die Schachtumwandung des Schachtes 18 als Gitter 27, insbesondere aus einem Gitter 27, ausgebildet sein.

Bevorzugt kann der wenigstens eine Schacht 18 einen im Wesentlichen rechteckigen Querschnitt aufweisen. Dabei kann der Schacht 18 vier Seitenflächen aufweisen, wobei die Durchlassöffnungen 26 an den Seitenflächen, insbesondere gleichmäßig verteilt an allen vier Seitenflächen, ausgebildet sind.

Bevorzugt kann der wenigstens eine Schacht 18 einen im Wesentlichen kreisförmigen Querschnitt aufweisen. Dabei kann der Schacht 18 im Wesentlichen zylindrisch ausgebildet sein, wobei die Durchlassöffnungen 26 an der Mantelfläche des Zylinders angeordnet sind.

Bevorzugt kann vorgesehen sein, dass die Höhe 28 des Schachtes 18 kleiner als die Höhe 29 des Frittierkorbs 20 ist. Dadurch kann bei einem Frittieren des Frittierguts 22 eine besonders gute Strömung der Frittüre 4 seitlich aus dem Schacht 18 erreicht werden.

Die Höhe 29 des Frittierkorbs 20 ist bevorzugt die Länge zwischen der Unterseite 23 des Frittierkorbs 20 und der Oberseite 21 des Frittierkorbs 20. In Fig. 1 ist die Höhe 29 des Frittierkorbs 20 beispielhaft gezeigt.

Es ist vorgesehen, dass an dem oberen Ende 25 des Schachtes 18 eine Abdeckung 19 angeordnet ist, welche Abdeckung 19 den Schacht 18 an dem oberen Ende 25 verdeckt. Der Schacht 18 umfasst dabei die Abdeckung 19. Die Abdeckung 19 ist dabei insbesondere Teil des Schachtes 18. Bevorzugt kann die Abdeckung 19 den Schacht 18 nach oben hin verdecken. Verdeckt kann insbesondere auch als verschließt bezeichnet werden. Bevorzugt kann die Abdeckung 19 den Schacht 18 an dem oberen Ende 25 vollständig verschließen. Durch die Abdeckung 19 kann die Frittüre 4 den Schacht 18 nicht ungehindert nach oben verlassen, sondern wird seitlich in das Frittiergut 22 umgelenkt.

Bevorzugt ist Abdeckung 19 derart ausgebildet, dass das obere Ende 25 des Schachtes 18 vollständig verschlossen bzw. abgedeckt wird.

Bevorzugt kann die Abdeckung 19 auch als Deckel für den Schacht 18 bezeichnet werden.

Bevorzug ist die Abdeckung 19 aus Metall, insbesondere aus Edelstahl, ausgebildet.

Bevorzugt ist die Abdeckung 19 ein Metalldeckel.

Die Höhe 28 des Schachtes 18 ist bevorzugt die Länge zwischen dem unterem Ende 24 des Schachtes 18 bis zu einer Oberseite der Abdeckung 19, welche Abdeckung 19 an dem oberen Ende 25 des Schachtes 18 angeordnet ist. In Fig. 3 ist die Höhe 28 des Schachtes 18 beispielhaft gezeigt.

Besonders bevorzugt kann vorgesehen sein, dass der wenigstens eine Schacht 18 in einer mittleren Höhe des Frittierkorbs 20 endet. Bevorzugt kann die mittlere Höhe des Frittierkorbs 20 ein Bereich sein, welcher sich von Mitte der Höhe in Richtung der Oberseite 21 des Frittierkorbs 20 und der Unterseite 23 des Frittierkorbs 20 erstreckt. Bevorzugt kann sich der Bereich mindestens 10 %, insbesondere mindestens 20 %, einer gemessenen Höhe 29 des Frittierkorbs 20 in Richtung der Oberseite 21 des Frittierkorbs 20 und der Unterseite 23 des Frittierkorbs 20 erstrecken. Dadurch kann eine besonders effektive Strömung durch den Schacht 18 und durch die Durchlassöffnungen 26 ausgebildet werden, wodurch die einzelnen Teile eines Haufens eines Frittierguts 22 besonders gleichmäßig frittiert werden können.

Ein Haufen eines Frittierguts 22 ist insbesondere eine Menge übereinanderliegender Dinger, wie etwas Pomes frites. Ein Haufen eines Frittierguts 22 kann beispielsweise in einem im Wesentlichen vollständig gefüllten Frittierkorb 20 vorliegen. Dies ist beispielhaft in Fig. 1 mit dem als Pommes frites gezeigten Frittiergut 22 gezeigt. Das Frittiergut 22 bzw. die Pommes frites sind dabei nicht Teil des Frittiereinsatzes 16, sondern sind in Fig. 1 lediglich zur Veranschaulichung des Haufens gezeigt.

Bevorzugt kann sich der wenigstens eine Schacht 18 mindestens ein Viertel, bevorzugt mindestens die Hälfte, insbesondere mindestens zwei Drittel, der Höhe 29 des Frittierkorbs 20 von der Unterseite 23 des Frittierkorbs 20 in Richtung der Oberseite 21 des Frittierkorbs 20 erstrecken.

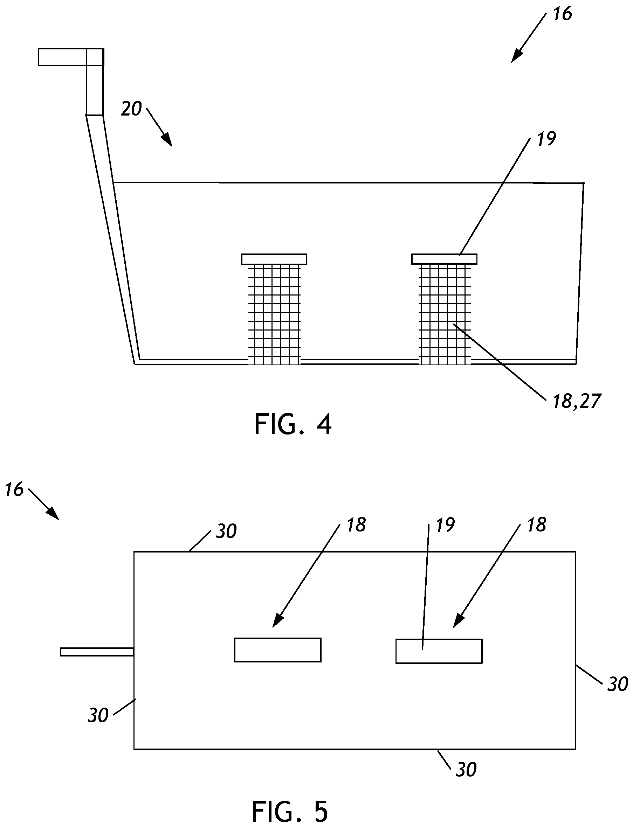

Besonders bevorzugt kann vorgesehen sein, dass der wenigstens eine Schacht 18 gleichmäßig beabstandet zu zumindest zwei gegenüberliegenden Wänden 30 des Frittierkorbs 20 angeordnet ist. Dabei kann der wenigstens eine Schacht 18 insbesondere zentral innerhalb des Frittierkorbs 20 angeordnet sein. Dabei kann der Frittierkorb 20 bevorzugt vier Wände 30 aufweisen, wobei jeweils zwei der vier Wände 30 gegenüberliegend und beabstandet zueinander angeordnet sind. In Fig. 5 sind die Wände 30 des Frittierkorbs 20 an einem Frittierkorb 20 mit einer rechteckigen Grundfläche beispielhaft gezeigt. Dabei sind in Fig. 5 zwei Schächte 18 beispielhaft gezeigt, welche gleichmäßig beabstandet zu zwei gegenüberliegenden Wände 30 des Frittierkorbs 20 angeordnet sind.

Bevorzugt kann der Frittierkorb 20 eine Breite, eine Länge und die Höhe 29 aufweisen.

Bevorzugt kann die Höhe 29 des Frittierkorbs 20 mindestens 10 cm, besonders bevorzugt mindestens 15 cm, insbesondere mindestens 20 cm, sein Bevorzugt kann die Breite des Frittierkorbs 20 mindestens 10 cm, besonders bevorzugt mindestens 15 cm, insbesondere mindestens 20 cm, sein.

Bevorzugt kann die Länge des Frittierkorbs 20 mindestens 20 cm, besonders bevorzugt mindestens 30 cm, insbesondere mindestens 40 cm, sein.

Alternativ kann der Frittierkorb 20, insbesondere von der Unterseite 23 des Frittierkorbs 20 bis zur Oberseite 21 des Frittierkorbs 20, einen im Wesentlichen kreisrunden Querschnitt aufweisen. Dabei kann an einer Stelle der Durchmesser des Querschnitts des Frittierkorbs 20 bevorzugt mindestens 10 cm, besonders bevorzugt mindestens 20 cm, insbesondere mindestens 30 cm, sein.

Bevorzugt kann vorgesehen sein, dass der Frittiereinsatz 16, insbesondere der Frittierkorb 20, mehrere Schächte 18 aufweist.

Besonders bevorzugt kann vorgesehen sein, dass der Frittiereinsatz 16 wenigstens zwei, bevorzugt wenigstens drei, insbesondere wenigstens vier, Schächte 18 aufweist. Dadurch kann ein besonders gleichmäßiges Frittieren des Frittierguts 22, insbesondere bei größer ausgebildeten Frittiereinsätzen 16, erreicht werden. In Fig. 4 ist eine zweite bevorzugte Ausführungsform des Frittiereinsatzes 16 in Schnittansicht gezeigt, wobei beispielhaft zwei Schächte 18, welche als Gitter 27 ausgebildet sind, gezeigt sind. Fig. 5 zeigt weiters die in Fig. 4 gezeigte bevorzugte Ausführungsform des Frittiereinsatzes 16 in Draufsicht.

Bevorzugt können die wenigstens zwei, bevorzugt wenigstens drei, insbesondere wenigstens vier, Schächte 18 jeweils gleichmäßig beabstandet zu zumindest zwei gegenüberliegenden Wänden 30 des Frittierkorbs 20 angeordnet sein.

Der Frittiereinsatz 16 und das erfindungsgemäße Verfahren soll anhand des nachfolgenden Beispiels noch einmal zusammengefasst erläutert werden.

In den Frittierkorb 20 des Frittiereinsatzes 16 wird ein Frittiergut 22, wie beispielsweise die in Fig. 1 gezeigten Pommes frites hineingegeben. Dabei kann der Frittierkorb 20 insbesondere vollständig mit dem Frittiergut 22 gefüllt sein. Anschließend wird der Frittiereinsatz 16 in eine Fritteuse 1 eingesetzt. Bevorzugt wird der Frittiereinsatz 16 derart in den mit Frittüre 4 gefüllten Frittierbehälter 2 der Fritteuse 1 eingesetzt, dass zumindest die Abdeckung 19 unterhalb der Frittüreoberfläche angeordnet ist. Dadurch wird erreicht, dass die Frittüre 4 zuerste durch den Schacht 18 und den Durchlassöffnungen 26 strömt, anschließend durch das Frittiergut 22, also die Pommes frites, strömt, wodurch das Frittiergut 22 gleichmäßig frittiert wird. Nachdem das Frittiergut 22 bis zum gewünschten Zustand frittiert wurde, wird der Frittiereinsatz 16 aus der Fritteuse 1 entnommen und anschließend das Frittiergut 22 aus dem Frittiereinsatz 16, insbesondere dem Frittierkorb 20, herausgenommen.

Bevorzugt wird in dem Frittierbehälter 2 der Fritteuse 1 bei dem Frittieren des Frittierguts 22 eine Frittüreströmung ausgebildet.

Bevorzugt strömt bei dem Frittieren des Frittierguts 22 die Frittüre 4 durch das untere Ende 24 des Schachtes 18 in den Schacht 18 hinein und verlässt den Schacht 18 durch die Durchlassöffnungen 26.

Bevorzugt strömt die Frittüreströmung zumindest teilweise durch den Schacht 18 und durch die Durchlassöffnungen 26 zu dem Frittiergut 22.

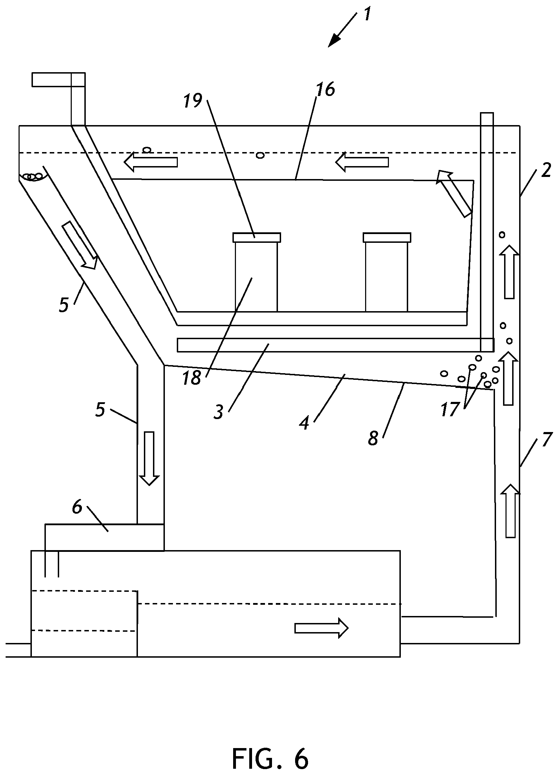

Der erfindungsgemäße Frittiereinsatz 16 eignet sich besonders gut im Zusammenspiel mit der Fritteuse 1 mit einem Frittürekreislauf, da es durch die Pumpe in dem Frittürekreislauf zu einer besonders stark ausgebildeten Strömung kommt. Eine derartige Fritteuse 1 mit dem Frittürekreislauf ist beispielhaft in Fig. 6 gezeigt.

Der erfindungsgemäße Frittiereinsatz 16 ist allerdings auch bei herkömmlichen Fritteusen 1 ohne dem Frittürekreislauf einsetzbar und vorteilhaft. Der Frittiereinsatz 16 ist daher nicht auf die Verwendung der Fritteuse 1 mit dem Frittürekreislauf beschränkt, sondern kann an unterschiedlichen Fritteusen 1, insbesondere an unterschiedlich ausgebildeten Fritteusen 1, verwendet werden.

Fig. 6 zeigt zumindest Teile einer bevorzugten Ausführungsform einer Fritteuse 1 zur Reduktion von Schadstoffen in Frittiergütern 22, umfassend wenigstens einen Frittierbehälter 2, wenigstens eine in und/oder an dem Frittierbehälter 2 angeordnete Heizquelle 3, wenigstens einen Frittürekreislauf und wenigstens eine Pumpe zum Pumpen der Frittüre 4 in dem Frittürekreislauf, wobei der wenigstens eine Frittürekreislauf eine mit dem Frittierbehälter 2 verbundene Frittüreableitung 5, wenigstens ein mit der Frittüreableitung 5 verbundenes Filtersystem 6 und wenigstens eine mit dem Filtersystem 6 und dem Frittierbehälter 2 verbundene Frittürerückleitung 7 umfasst, wobei die Frittürerückleitung 7 mit dem Frittierbehälter 2 an einem Boden 8 des Frittierbehälters 2 verbunden ist, und dass der Boden 8 zu einem Auslass der Frittürerückleitung 7 abfallend ausgebildet ist.

Es ist weiters ein Verfahren zur Reduktion von Schadstoffen in Frittiergütern 22 umfassend das Frittiersystem vorgesehen, wobei Frittüre 4 in dem Frittierbehälter 2 erhitzt wird, wobei in einem Frittiereinsatz 16 angeordnete Frittiergüter 22 frittiert werden, wobei Frittüre 4 durch die Frittüreableitung 5 in den Frittürekreislauf abgeleitet und mittels des Filtersystems 6 gereinigt wird, wobei gereinigte Frittüre 4 über die Frittürerückleitung 7 in den Frittierbehälter 2 rückgeleitet wird, wobei der Frittierbehälter 2 einen zu dem Auslass der Frittürerückleitung 7 abfallenden Boden 8 aufweist, wodurch Frittierreste 17 von dem Boden 8 des Frittierbehälters 2 durch die rückgeleitete gereinigte Frittüre 4 mitgerissen und durch die erzeugte Frittüreströmung an die Oberfläche der Frittüre 4 geschwemmt werden.

Dadurch ergibt sich der Vorteil, dass die Entwicklung schädlicher chemischer Substanzen wie beispielsweise Acrylamid während des Frittierens stark verringert wird. Dadurch, dass die Frittürerückleitung 7 mit dem Frittierbehälter 2 an dem Boden 8 des Frittierbehälters 2 verbunden ist, und der Boden 8 zu dem Auslass der Frittürerückleitung 7 abfallend ausgebildet ist, werden Frittierreste 17 durch den rückgeleiteten Frittürestrom von dem Boden 8 mitgerissen und an die Frittüreoberfläche geschwemmt, von welcher sie abgetrennt werden können. Eine Kaltzone und Wasserablagerungen in einer Kaltzone werden hierdurch vermieden und durch das Fehlen der Kaltzone wird die Acrylamidbildung stark verringert, wodurch die Frittiergüter 22 weniger stark mit Acrylamiden belastet sind. Hierdurch muss die Frittüre 4 weniger oft gewechselt werden und es findet eine stetige Reinigung der Frittüre 4 statt. Stillstandzeiten der Fritteuse 1 werden stark verringert und es kann weiters aufgrund des erzeugten Frittürestromes mit niedrigerer Temperatur frittiert werden, da die Frittiergüter stets mit Frittüre 4 umspült werden, bzw. der Frittürestrom an den Frittiergütern vorbeiführt, was zu einer guten Wärmeübertragung innerhalb des Frittierbehälters 2 von der Frittüre 4 auf das Frittiergut 22 führt. Durch das Umspülen bzw. Vorbeiführen des Frittürestromes an den Frittiergütern 22 können weiters auch an den Frittiergütern 22 anhaftende Frittierreste 17 entfernt werden, wodurch die Frittiergüter 22 gereinigt werden.

Weiters ist vorteilhaft, dass Energie eingespart werden kann, da Frittüre 4 nicht häufig ausgetauscht und somit von Zimmertemperatur zu einer Betriebstemperatur aufgeheizt werden muss, sondern Wärme in der Frittüre 4 während des Frittürekreislaufs verbleibt. Die Reinigung der Frittüre 4 anstelle eines kompletten Austausches der Frittüre 4 ist weiters ressourcenschonend.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Bei Wertebereichen sind die Endpunkte mitumfasst, sofern es sich aus dem Kontext nicht anders ergibt.

## Patentansprüche

1. Frittiereinsatz (16) für eine Fritteuse (1) mit einem Frittierkorb (20), wobei der Frittierkorb (20) eine Oberseite (21) mit einer Öffnung zur Zufuhr und Entnahme von Frittiergut (22) in den Frittierkorb (20) und eine von der Oberseite (21) gegenüberliegende und beabstandet zu der Oberseite (21) angeordnete Unterseite (23) aufweist, wobei der Frittiereinsatz (16) wenigstens einen sich von der Unterseite (23) des Frittierkorbs (20) in Richtung der Oberseite (21) des Frittierkorbs (20) erstreckenden Schacht (18) als Strömungskanal für Frittüre (4) umfasst, wobei der Schacht (18) ein der Unterseite (23) des Frittierkorbs (20) zugewandtes unteres Ende (24) und ein gegenüberliegendes und beabstandet zu dem unteren Ende (24) des Schachtes (18) angeordnetes oberes Ende (25) aufweist, wobei an einer Wand des Schachtes (18) Durchlassöffnungen (26) zum Strömen von Frittüre (4) aus dem Schacht (18) ausgebildet sind, **dadurch gekennzeichnet, dass** an dem oberen Ende (25) des Schachtes (18) eine Abdeckung (19) angeordnet ist, welche Abdeckung (19) den Schacht (18) an dem oberen Ende (25) verdeckt.

2. Frittiereinsatz (16) nach Anspruch 1, **dadurch gekennzeichnet, dass** die Wand des Schachtes (18) als Gitter (27) ausgebildet ist.

3. Frittiereinesatz (16) nach Anspruch 1 oder 2, **dadurch gekennzeichnet, dass** die Höhe (28) des Schachtes (18) kleiner als die Höhe (29) des Frittierkorbs (20) ist.

4. Frittiereinsatz (16) nach einem der Ansprüche 1 bis 3, **dadurch gekennzeichnet, dass** der wenigstens eine Schacht (18) in einer mittleren Höhe des Frittierkorbs (20) endet.

5. Frittiereinsatz (16) nach einem der Ansprüche 1 bis 4, **dadurch gekennzeichnet, dass** der wenigstens eine Schacht (18) gleichmäßig beabstandet zu zumindest zwei gegenüberliegenden Wänden (30) des Frittierkorbs (20) angeordnet ist.

6. Frittiereinsatz (16) nach einem der Ansprüche 1 bis 5, **dadurch gekennzeichnet, dass** der Frittiereinsatz (16) wenigstens zwei, bevorzugt wenigstens drei, insbesondere wenigstens vier, Schächte (18) aufweist.

7. Verfahren zum Frittieren von Frittiergut (22) in einer Fritteuse (1) umfassend einen Frittiereinsatz (16) mit einem Frittierkorb (20), insbesondere nach einem der Ansprüche 1 bis 6,
- wobei in einem ersten Schritt dem Frittierkorb (20) das Frittiergut (22) über eine Öffnung an einer Oberseite (21) des Frittierkorbs (20) zugeführt wird, wobei der Frittierkorb (20) eine von der Oberseite (21) gegenüberliegende und beabstandet zu der Oberseite (21) angeordnete Unterseite (23) aufweist, wobei sich wenigstens ein Schacht (18) von der Unterseite (23) des Frittierkorbs (20) in Richtung der Oberseite (21) des Frittierkorbs (20) erstreckt, wobei der wenigstens eine Schacht (18) ein der Unterseite (23) des Frittierkorbs (20) zugewandtes unteres Ende (24) und ein gegenüberliegendes und beabstandet zu dem unteren Ende (24) des Schachtes (18) angeordnetes oberes Ende (25) aufweist, wobei an dem oberen Ende (25) des Schachtes (18) eine Abdeckung (19) angeordnet ist, welche Abdeckung (19) den Schacht (18) an dem oberen Ende (25) verdeckt, wobei an einer Wand des Schachtes (18) Durchlassöffnungen (26) zum Strömen von Frittüre (4) aus dem Schacht (18) ausgebildet sind,
- wobei in einem nachfolgenden Schritt der Frittiereinsatz (16) in einen mit Frittüre (4) gefüllten Frittierbehälter (2) der Fritteuse (1) eingesetzt wird,
- wobei bei dem Frittieren die Frittüre (4) von dem unteren Ende (24) des Schachtes (18) in den Schacht (18) strömt und den Schacht (18) durch die Durchlassöffnungen (26) verlässt.
